## Europäisches Patentamt

## European Patent Office

## Office européen des brevets

(19)

(11) Veröffentlichungsnummer: **0 199 958**
**B1**

(12) # EUROPÄISCHE PATENTSCHRIFT

(45) Veröffentlichungstag der Patentschrift:
**25.01.89**

(51) Int. Cl.⁴: **F27D 1/00**, F27D 3/02,
F16L 59/12, F27D 1/04

(21) Anmeldenummer: **86103613.5**

(22) Anmeldetag: **18.03.86**

(54) **Feuerfeste Ummantelung für Rohre in Vorwärmöfen.**

(30) Priorität: **29.03.85 DE 3511606**

(43) Veröffentlichungstag der Anmeldung:
**10.12.86 Patentblatt 86/45**

(45) Bekanntmachung des Hinweises auf die Patenterteilung:
**25.01.89 Patentblatt 89/4**

(84) Benannte Vertragsstaaten:
**AT BE DE FR GB IT NL**

(56) Entgegenhaltungen:
**DE-A- 3 403 749**
**FR-A- 2 101 137**
**FR-A- 2 216 843**
**FR-A- 2 508 594**
**GB-A- 534 869**
**GB-A- 2 023 269**
**GB-A- 2 039 829**
**US-A- 3 705 253**
**US-A- 4 304 267**

(73) Patentinhaber: **Bloom Engineering (Europa) GmbH,
Büttgenbachstrasse 14, D-4000 Düsseldorf 11(DE)**

(72) Erfinder: **Schatschneider, Peter, Antoniterstrasse 10,
D-4049 Rommerskirchen 2(DE)**

(74) Vertreter: **Behrens, Dieter, Dr.-Ing. et al, Patentanwälte
WUESTHOFF-V. PECHMANN-BEHRENS-GOETZ
Schweigerstrasse 2, D-8000 München 90(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine feuerfeste Ummantelung aus unbrennbaren zusammengedrückten Isolierkörpern aus Mineral- oder Keramikfasern für die Wärmeisolierung von Rohren, Gleitschienenrohren, Tragrohren, Stehrohren und dergleichen in, insbesondere untergefeuerten Vorwärmöfen, Stoßöfen oder Hubbalkenöfen, bei der die Isolierkörper im Profil innen und gegebenenfalls auch außen bogenförmig ausgebildet sind, das zu isolierende Rohr in Umfangsrichtung vollständig oder nahezu vollständig umschließen und das Rohr dicht aneinanderstoßend durch wenigstens zwei Halterungen gesichert sind, die an den Enden mehrerer, aneinanderliegender, einen Isolierkörperstapel bildender Isolierkörper angreifen.

Aus DE-A 13 125 440 ist eine feuerfeste Ummantelung für derartige Rohre bekannt, die aus einer Vielzahl dicht aneinandergereihter und das Rohr umhüllender, geschlitzter Isolierkörper in Form von Mineral- oder Keramikfaserringen gebildet ist und bei der benachbarte Ringe mit ihren aneinanderanliegenden Stirnflächen zusammengeklebt sind. Die Ringe können mit ihren Umfangflächen dabei direkt auf das zu isolierende Rohr bzw. auf ein dieses umhüllendes Metallgewebe aufgeklebt sein. Zwar wird durch diese Maßnahme im allgemeinen eine gute Verbundwirkung erzielt, jedoch kann bei langer Inbetriebnahme der Öfen bei Temperaturen über ca. 1000°C ein Ablösen einzelner oder mehrerer quergeschlitzter Ringe nicht vermieden werden, so daß das zu isolierende Rohr nicht ausreichend lange gegen die hohen Temperaturen isoliert ist. Außerdem wird für die Lagerung und den Zuschnitt der Faserringe ein großer Raum wegen des hohen Rohvolumens benötigt.

Aus FR-A 7 516 444 ist eine ähnliche aus einzelnen Isolierkörpern in Form von Ringen aus Mineralfasern zusammengesetzte feuerfeste Ummantelung bekannt, bei der die geschlitzten Ringe dicht aneinanderliegend auf das zu isolierende Rohr, einen Isolierkörperstapel bildend, aufgeschoben und in Richtung der Längsachse komprimiert sind. Bei dieser Ausgestaltung ist auf eine Verklebung benachbarter Ringe verzichtet. Stattdessen sind jeweils an den Enden eines Stapels kreisbogenförmige Halterungen aus geschlitzten Flanschringen aus Aluminiumsilikat am Rohr vorgesehen, die mittels Bindedraht oder Klemmen gegen den Rohrumfang verspannt und zwischen denen die Ringe in Richtung der Rohrachse zusammengedrückt sind. Auch bei dieser Ausführungsform einer feuerfesten Ummantelung kann ein Lösen der einzelnen ringförmigen Isolierkörper nicht ausreichend sicher vermieden werden, da die Halterungen, der Bindedraht oder die Klemmen, die nach außen freiliegen, gegen die im Ofeninnenraum herrschenden hohen Temperaturen nicht ausreichend hitze- bzw. oxydationsbeständig sind, so daß auch hier die Gefahr besteht, daß sich Teile der feuerfesten Ummantelung vom zu isolierenden Bauteil mit der Zeit ablösen und zeit- und kostenintensive Reparaturarbeiten durchgeführt oder gar schwer beschädigte Rohre ausgewechselt werden müssen.

Schließlich ist eine feuerfeste Ummantelung der eingangs genannten Art bekannt (DE-GM 8 407 841), bei welcher die Halterungen für die ringförmigen Faser-Isolierkörper zwei schmale, etwa halbkreisförmige, scharnierartig miteinander verbundene, mittels eines Spannkeils am Rohr verspannte Haltebügel umfassen, an deren beiden seitlichen Stirnflächen flächennormal zu diesen und mit Abstand voneinander stift- oder nadelförmige Halteelemte (Spieße) befestigt sind, die in die Isolierkörper zwischen den Haltebügeln hineinreichen. Bei dieser Ummantelung sind die Isolierkörper, die aus einer Vielzahl dicht aneinanderliegender und in Richtung der Längsachse des Bauteils komprimierter Mineral- oder Keramikfaser-Ringe oder -Ringsegmente bestehen, sicher zwischen den Haltebügeln am Rohr befestigt, da die geschlitzten Ringe oder Ringsegmente auf die stift- oder nadelförmigen Halteelemente aufgesteckt und auch bei hoher Temperaturbeanspruchung unverrückbar am zu isolierenden Rohr formschlüssig gehalten sind. Auch diese Ummantelung bedarf ebenso wie die anderen genannten Ummantelungen eines höheren Montageaufwandes und Lagerraums vor der Montage für die zunächst nicht komprimierten Ringe. Es hat sich gezeigt, daß bei hoher mechanischer Vibrationsbeanspruchung, wie sie insbesondere in Vorwärm-Stoßöfen auftritt, ein Lösen von Teilen der Ummantelung nicht ausgeschlossen werden kann, weil die ringförmigen Isolierkörper durch die stift- oder nadelförmigen Halteelemente durchschnitten werden.

Alle bekannten Ummantelungen aus Mineral- oder Keramikfasern, ganz gleich ob auf Aluminiumsilikat-, Aluminiumoxid- oder Zirkonoxid-Basis, unterliegen bei der Erwärmung auf Betriebstemperaturen von 900 bis 1200°C, wie sie in den oben genannten untergefeuerten Öfen typischerweise auftreten, einer sehr starken Schwindung, die bis über 7% reichen kann. Selbst vakuumgeformte Faserformteile können noch schwinden.

Bei aufeinander- bzw. nebeneinandergeschichteten, einseitig geschlitzten ringförmigen Isolierkörpern muß darauf geachtet werden, daß in einer Richtung verlaufende Stapelfasern so ausgerichtet werden, daß sich benachbarte Stapelfaserschichten kreuzen, da diese sonst bei paralleler Anordnung mechanisch aus der Fasermatte gelöst werden könnten und der Verfall der Isolierung wahrscheinlich wäre, da die im Ofen hergestellte Rohrummantelung nicht sehr hoch verdichtet werden kann, und wegen Rückfederung der Ringe nicht im verdichteten Zustand verbleibt.

Die hier genannten Isolier-Ummantelungen aus Faser-Formteilen werden wegen ihres erheblich geringeren Raumgewichtes zunehmend gegenüber solchen aus Keramikkörpern, Keramikformteilen einschließlich formschlüssig miteinander verbundenen Formteilen, eingesetzt, weil sie besser isolieren, leichter montiert werden können und sich selbst tragen, eine leichtere Ausbildung ermöglichen und somit zu einer Entlastung der Rohrkonstruktion führen.

Der Erfindung liegt die Aufgabe zugrunde, die eingangs genannte Isolier-Ummantelung dahinge-

hend fortzuentwickeln, daß die Gefahr des Ablösens vom Rohr bei dessen ständiger Vibration gemindert ist und daß der Platzbedarf für die Isolierung an der Baustelle und der dortige Montageaufwand erniedrigt sind.

Zur Lösung dieser Aufgabe ist bei der eingangs genannten Ummantelung vorgesehen, daß mehrere Isolierkörper aus Mineral- oder Keramikfasern auf mehreren beabstandeten Spießen zu einem hochverdichteten Isolierkörperstapel aufgereiht sind, daß zwischen den an den Enden des Stapels vorgesehenen Halterungen der Spieße im Abstand voneinander mehrere Verdichtungs-Klemmhalter auf diesen befestigt sind und die Spieße mit ihrer Spitze über die eine Stirn- oder Stoßfläche des ein vorgefertigtes Formteil bildenden Isolierkörperstapels vorstehen. Zweckmäßig ist es, wenn die Spitzen oder Spieße in der ihnen zugewandten Stirn- oder Stoßfläche oder in der Halterung des anstoßenden Formteils zur Erzielung eines Verbundes aufgenommen sind.

Verdichtungs-Klemmhalter sind vorzugsweise nach jedem zweiten oder dritten Isolierkörper vorgesehen. Um die einzelnen Isolierkörper nicht nur kraftschlüssig aneinander zu halten sondern sie auch formschlüssig mit dem Spieß zu verbinden, können die Verdichtungs-Klemmhalter bzw. -klipse von wenigstens einer Seite vorstehende, in die anliegenden Isolierkörper angreifende Krallen oder Lappen aufweisen. Die Ausführungsform ist einfach, wenn die Halter polygonale Form aufweisen und die Ecken lappenartig um etwa 90° umgebogen sind, wobei diese abwechselnd nach der einen oder anderen Richtung abgewinkelt sein können, um in beide benachbarten Stirnflächen der Isolierkörper einzugreifen. Statt besonders leicht montierbare Klemmhalter können auch Scheiben, die auf den Spießen durch Schweißung befestigt sind, oder andere Widerlager verwendet werden.

Die neue Ummantelung läßt eine sehr hohe Verdichtung der Mineral- oder Keramikfasern bereits bei der Herstellung der Formteile zu, so daß die Gefahr des Lösens von Schichten nicht mehr besteht. Daher müssen die Stapelfasern auch nicht gekreuzt oder gar durch zusätzliche senkrecht durchgezogene Fasern verhakt oder verankert werden. Die bei der Herstellung erzielbare hohe Verdichtung ist gleichmäßig über die Länge des Formteils verteilt, da in regelmäßigen Abständen Verdichtungs-Klemmhalter (Klipse), vorzugsweise nach jedem zweiten oder dritten Isolierkörper bzw. Ring, vorgesehen sind. So lassen sich Isolierkörper mit einer Rohdichte von 128 kg/m³ auf mindestens die doppelte Dichte verdichten. Vorzugsweise erfolgt die Verdichtung auf 250 bis etwa 300 kg/m³.

Die Spieße sind aus warmfestem Werkstoff, der eine Temperaturfestigkeit bis 1150°C haben sollte, insbesondere mit ca. 25% Chrom- und 20% Nickelanteil, gefertigt. Aufgrund der Herstellung vorgefertigter Formteile hoher Dichte besteht an der Baustelle kein hoher Platzbedarf für die Lagerung der in der Fabrik hergestellten Formteile vor deren Montage. Die Montage ist erleichtert, da die Formteile nur noch an den Rohren zu befestigen, insbes. zu verkleben sind. Das Anbringen besonderer Halterungsteile an den Rohren ist normalerweise nicht erforderlich. Durch die bleibende Vorkomprimierung der Isolierkörper (Ringe) und die dadurch entstehende hohe Dichte wird die vorgenannte Schwindung auf ein Minimum reduziert. Stehen die Spieße nicht über oder ragen ihre vorstehenden Spitzen nur in zwischen benachbarten Formteilen vorgesehene einzelne Isolierkörper, so können die Formteile einzeln ausgewechselt werden.

Zur Isolierung waagerechter Rohre, die beispielsweise Gleitschienenrohre aufnehmen, und vertikaler Rohre nach der Verbindung mit anderen Rohren, sind etwa halbschalenförmige Formteile zweckmäßig, bei denen die Spitzen der Spieße frei vorstehen und zu beiden Seiten wenigstens der einen rohrparallelen Stoßstelle mechanisch, insbes. mittels Bügeln, Steckplatten oder Klemmhaltern z.B. Steckklipsen, miteinander verbunden sind. Die jeweils einander gegenüberliegenden Halbschalen werden nach dem Ankleben am Rohr zunächst mittels der Bügel oder Steckplatten die Stoßstellen überbrückend miteinander verbunden, worauf weitere benachbarte Formteile angesetzt werden.

Bei einer anderen Ausführungsform, insbesondere für waagerechte Gleitschienenrohre, die von der Isolierung nicht vollständig umschlossen werden können, weil die Gleitschiene, über die die Brammen oder zu erwärmenden Metallrohlinge geschoben werden, nach oben über die Isolierung vorstehen muß, ist es zweckmäßig, die etwa halbschalenförmigen Formteile als in Längsrichtung derart abgestufte Formteile auszubilden, daß in Umfangsrichtung und in Längsrichtung anstoßende Formteile einen geschlossenen Verband bilden. Eine derartige Ausbildung ineinandergreifender Formteile ist an sich von keramischen Formteilen zur Isolierung der Rohre in den angesprochenen Vorwärmöfen bekannt.

Um die Halterung, insbes. an den waagerechten Gleitschienenrohren noch sicherer auszubilden, ist gemäß einer Ausgestaltung dieser Ausführungsform vorgesehen, daß zwischen den Stirnflächen benachbarter Formteile zwei etwa halbkreisbogenförmige, einander über der rohrachsparallelen Stoßfläche überlappende flache Ronden eingesetzt sind, die im Überlappungsbereich von Spießen beider etwa halbschalenförmiger Formteile durchdrungen werden und die wenigstens auf der der rohrachsparallelen Stoßfläche gegenüberliegenden Seite des Rohrs an diesem anliegen.

Es kann zweckmäßig sein, die Formteile, z.B. Halbschalen, an der unteren rohrachsparallelen bzw. axialen Stoßfläche verstärkt auszubilden. Dort sind sie vor den Stirnflächen mit Verbindungsdoppelhaken oder Doppelklemmhaltern miteinander zu verbinden, wenn sie an oberen Trennfugen wegen des Vorhandenseins einer Gleitschiene nicht miteinander verbunden werden können. Die Verbindungsdoppelhaken oder Doppelklemmhalter werden immer an der Formteil-Stirn- oder Stoßfläche, die vorzugsweise als Labyrinth ausgebildet ist, vorgesehen, und über aus der einen Stirnseite herausragende Spießenden geschoben. Dadurch wird eine sichere Verbindung der vorgefertigten Formteile ums Rohr herum erreicht. Allein durch eine versetzte Anordnung der Formteile sowie durch eine Verbindung der Spieße benachbarter Formteile ist bereits ein sicherer Halt des Formteils um das Rohr gewährleistet.

Für die Isolierung von Stehrohren (vertikalen Rohren) kann es ausreichend sein, daß die, z.B. halbschalenförmigen Formteile mit Spießen und aufgeschobenen Verdichtungs-Klemmhaltern in Rohrrichtung zusammengehalten bzw. miteinander verbunden werden, welche über beide Stirnseiten der Formteile mit Spitzen hinausreichen und in die angrenzenden Formteile unmittelbar eingestochen sind. Dabei sollten die Formteile derart ausgebildet sein, daß sie eine abgestufte Stoßfläche aufweisen und überlappt eingebaut werden können. Dadurch werden unterschiedliche, z.B. rechte und linke, Formteile vermieden, was Montage und Lagerhaltung erleichtert. Es brauchen sich zwischen den Formteilen keine Verbindungsplatten oder -haken zu befinden. Die Spieße können unmittelbar in die Formteile eingestochen werden. Sie haben eine arretierende Wirkung, da sich die Isolierung selbst trägt. Diese Ausführungsform läßt sich sehr schnell montieren. Die Außenkontur der Ummantelung kann im Querschnitt auch rechteckig, insbes. quadratisch ausgebildet und mit einer Schutzschicht versehen sein.

Auch bei formstabilen Formteilen ist eine zusätzliche Befestigung zweckmäßig, da sie bei waagerechten Rohren, insbes. bei Gleitschienenrohren, nur auf dem über dem Rohrmittelpunkt liegenden Rohroberteil hängen. Um ein Aufbiegen des oberen Teils der Formteile zu verhindern, wird eine Sicherung außer gemäß Anspruch 7 dann erreicht, wenn die Isolierkörper wenigstens im Bereich der Enden ihrer seitlichen Stirnflächen miteinander verklebt sind. Eine solche Spantenverklebung zwischen den einzelnen Faser-Isolierkörpern führt zu einer Formstabilisierung. Für die Verklebung eignen sich chemisch-keramische Kleber. Diese erreichen bereits bei Raumtemperatur hohe Festigkeit, die mit steigenden Temperaturen zunimmt, so daß die Spantenverklebung eine Verformung des Formteils nicht mehr zuläßt.

Eine weitere Ausführungsform der Formteile, die ebenfalls insbesondere für waagerechte Rohre mit einer Gleitschiene oder mit Tragköpfen geeignet ist, ist mit ihren Ausgestaltungen in den Patentansprüchen 12 bis 15 gekennzeichnet. Das Formteil mit nur einer Längsfuge umfaßt einteilig den ganzen zu isolierenden Umfang des Rohrs. Die beiden rohrachsparallelen Stoßflächen reichen um das Rohr und stoßen gegeneinander oder gegen die Seitenflächen einer Gleitschiene oder bis nahe an diese, um eine Dichtungsfuge zu belassen. Zum Aufbringen des Formteils auf das Rohr wird es geöffnet, so daß das Rohr durch die Trennfuge hindurch paßt. Danach erfolgt ein Schließen und gegebenenfalls ein Verbinden der zu beiden Seiten der rohrachsparallelen Stoßflächen befindlichen Spieße an ihren Enden. Ein Festlegen des äußersten Isolierkörpers auf den Spießen mit Ringscheiben, die sich ihrerseits an einem auf dem Spieß aufgebrachten Schweißpunkt abstützen, läßt es zu, daß sich der bei Erwärmung dehnende Spieß in ein benachbartes Formteil ausdehnen kann.

Um eine besonders hohe Formstabilität der Formkörper zu erzielen, sieht eine weitere Ausgestaltung der Erfindung vor, daß zwischen zwei Faser-Isolierkörpern jeweils ein ringabschnittförmiger, formstabiler, vorgeformter Isolierkörper mit einer Dichte von wenigstens etwa 250 kg/m$^3$ und mit geringerer radialer Erstreckung als der Faser-Isolierkörper vorgesehen ist und daß die überstehenden Enden der Faser-Isolierkörper über die Außenflächen der formstabilen Isolierkörper geformt bzw. gebördelt sind. Diese vorgeformten, hochdichten Isolierkörper, die aus vakuumgeformten oder -gepreßten keramischen Faser-Isolierplatten ausgeschnitten werden können, übernehmen eine ähnliche Funktion wie die zuvor beschriebene Spantenverklebung, nämlich eine Formstabilisierung. Ein weiterer wertvoller Effekt wird durch die zwischengelegten Faser-Isolierkörper erzielt, die in ihrem äußeren Durchmesser größer als die der hochdichten Isolierkörper sind. Durch die Verdichtung dieser aufeinandergereihten Isolierkörper quetschen sich die längeren komprimierbaren Faser-Isolierkörper hinaus. Dieser vorstehende Teil der Faser-Isolierkörper wird fest auf die Stirnflächen der hochdichten Isolierkörper gebördelt oder mittels einer Rolle gerollt. Durch diese Überlappung wird verhindert, falls das Formteil durch hohe Temperatureinwirkung schrumpft, daß eine thermische Einstrahlung auf die Spieße trifft.

Um die Formteile vor äußeren Einflüssen, wie Temperatur, chemischen oder mechanischen Belastungen weiter zu schützen, ist es vorteilhaft, sie an ihrer Außenseite bereits bei der Fertigung oder gegebenenfalls erst bei der Montage mit einer 0,5 bis 5 mm, insbes. etwa 1 bis 1,5 mm, dicken Schutzschicht zu versehen. Das hierzu verwendete Material soll von höherer Qualität als die Faserqualität sein und hat vorzugsweise eine Zirkon-Silikat-Basis, welche chemisch (z.B. Aluminiumphosphat) verfestigt. Das Material wird mit einer Spritzpistole aufgetragen. Durch den Spritzdruck wird es mit einer maximalen Korngröße von etwa 1 mm zwischen die Fasern geschossen. Hierdurch ergibt sich eine innige Verbindung zwischen Faser und Beschichtung. Die Formteile bzw. die Fasern an der Außenseite werden auf diese Weise dauerhaft ummantelt. Dadurch sind die Fasern gegenüber chemischen Einflüssen und gegenüber mechanischen und thermischen Angriffen weitestgehend geschützt. Ein Verglasen, Verspröden und eine Schwindung, wie bei frei der Ofenatmosphäre ausgesetzten Fasern, wird somit stark reduziert.

Es hat sich als günstig herausgestellt, die Formteile vor dem Einbau durch Erwärmen auf 120°C bis 450°C vorzuverfestigen. Durch die allseitige Wärmebeaufschlagung wird eine gewisse Vorschrumpfung erreicht, so daß während des Betriebs die Restschrumpfung äußerst gering ist. Außerdem wird dadurch die Festigkeit einer vorhandenen Schutzschicht erhöht, welche dann wie eine dünnwandige keramische Schale wirkt.

Der Einbau der Formteile ist schnell und leicht zu bewerkstelligen und reduziert die hier anfallenden Kosten. Bei der Montage werden die Fertigteile zweckmäßigerweise innenseitig mit einem Spezialkleber versehen und an die Außenwand der zu isolierenden Rohre angeklebt. Diese Verklebung führt zu einem Korrosionsschutz gegen Säureangriff bei Taupunktsunterschreitungen an der Rohroberfläche. Außerdem bewirkt sie eine zusätzliche Halterung der Formteile am Rohr.

Die Formteile können von beiden Seiten nach der Kompression in ihrer Lage durch die Spieße gehalten werden. Die Halterung am einen Ende kann dann vorteilhafterweise als auf das Ende des Spießes aufgesteckte Kragenhülse ausgebildet sein, deren rohrförmiger Schaft das hintere Ende des Spießes, auf dem die Isolierkörper aufgereiht sind, und die Spitze des Spießes eines benachbarten Formteils aufnehmen. Alle Spieße werden somit in benachbarten Formteilen geführt. Die Spieße fluchten bei dieser Ausführungsform. Die Halterung kann aber am einen Ende des Formteils auch als aufgesteckter Verdichtungs-Klemmhalter mit zwei Klemmdurchbrechungen ausgebildet sein, von denen die eine das hintere Ende des Spießes und die andere die Spitze des Spießes eines benachbarten Formteils aufnimmt. In diesem Fall sollten die Spieße etwas schräg im Formteil verlaufen, um auch die seitlich versetzte, weitere Klemmdurchbrechung zu treffen. Eine solche weitere Klemmdurchbrechung kann auch im an der Stirnfläche des Formteils anliegenden Kragen der Kragenhülse ausgeformt sein. Außerdem lassen sich die Halterungen in Form einfacher Scheiben oder dergl. ausbilden. Sie müssen lediglich fest am hinteren Ende des Spießes befestigbar sein und die Spitze des Spießes eines benachbarten Formteils haltend aufnehmen können, es sei denn, daß bei senkrechten Isolierungen die Spießspitzen unmittelbar in die Isolierkörper der Formteile eingestochen werden.

Die neue Ummantelung erfordert grundsätzlich keine Halterungen, Bügel, Klammern und dergl., die am Rohr fixiert, insbes. angeschweißt werden müssen. Durch die Vorfertigung der Formteile sind Raumbedarf und Montagezeit an der Baustelle gering. Wegen der hohen Verdichtung sowie insbes. bei Vorverfestigung durch Vorschwindung (Vorschrumpfung) durch Wärmevorbehandlung ist die Schwindung bei der Anwendung gering. Die Überwachung der Qualität der Fertigung der Formteile erfolgt nicht an der Baustelle sondern in der Fabrik. Die Vorkomprimierung der einzelnen Faser-Isolierkörper ist dauerhaft. Die Formteile lassen sich für sämtliche Rohrformen und -anordnungen fertigen. Trotz der Verstärkung durch die Spieße und Verdichtungs-Klemmhalter sind die gewonnenen vorgefertigten Formteile leicht und lassen sich bequem einbauen. Alle Isolierkörper lassen sich aus handelsüblichen Isoliermatten oder -platten fertigen. Die äußere Kontur der Formbauteile muß nicht der inneren angeglichen werden. Diese können daher auch eckig sein.

Ausführungsbeispiele der Erfindung sind anhand einer Zeichnung näher erläutert, in der zeigt:

Fig. 1 eine perspektivische Ansicht einer Ummantelung für waagerechte Rohre aus mehreren abgestuften Formteilen,

Fig. 2 ein Formteil für die Ummantelung nach Fig. 1,

Fig. 3 eine perspektivische Ansicht einer Ummantelung für ein Stehrohr aus gleich hohen versetzt angeordneten Formteilen,

Fig. 4 ein Formteil für die Ummantelung nach Fig. 3,

Fig. 5 schrägperspektivisch einen Spieß mit aufgesteckter Kragenhülse und aufgestecktem Verdichtungs-Klemmhalter,

Fig. 6 einen Verdichtungs-Doppelklemmhalter,

Fig. 7 eine Ansicht eines Verbindungsbügels für zu beiden Seiten einer rohrachsparallelen bzw. axialen Trennfuge zwischen zwei aneinanderstoßenden Formteilen hervortretende Spießspitzen,

Fig. 8 in Schrägansicht eine Formteil-Isolierung für waagerechte Doppelrohre,

Fig. 9 ein abgestuftes Isolier-Formteil für die Ummantelung nach Fig. 8,

Fig. 10 eine schrägperspektivische Ansicht einer Ummantelung für ein Gleitschienenrohr aus halbschalenförmigen Formteilen,

Fig. 11 eine halbkreisförmige flache, der Rohrkontur angepaßte Halbronde,

Fig. 12 die Stirnfläche zweier Formteile mit zwei auf die Spieße aufgeschobenen Halbronden,

Fig. 13 eine schrägperspektivische Ansicht der Ummantelung eines Gleitschienenrohrs aus abgestuften Formteilen,

Fig. 14 zwei Formteile für die Ummantelung nach Fig. 13,

Fig. 15 ein Formteil im Querschnitt aus Faser-Isolierkörpern und vorgeformten hochdichten Isolierkörpern zu Beginn der Montage,

Fig. 16 den Isolierkörperstapel nach Fig. 15 im komprimierten Zustand,

Fig. 17 den Stapel nach Fig. 15 beim Umbördeln der überstehenden Faser-Isolierkörper,

Fig. 18 ein halbschalenförmiges Formteil in Schrägansicht, das gemäß den Fig. 15 bis 17 hergestellt ist,

Fig. 19 ein Gleitschienenrohr mit angesetztem Formteil nach Fig. 17 in Schrägansicht,

Fig. 20 ein Gleitschienenrohr mit durchgehender Gleitschiene mit es ungeteilt umfassenden, aufbiegbarem Formteil in Schrägansicht,

Fig. 21 ein Tragrohr mit einzelnen Tragköpfen mit es ungeteilt umfassendem, aufbiegbarem Formteil in Schrägansicht,

Fig. 22 zwei Halterungen für den Isolierkörperstapel eines starren oder auch aufbiegbaren Formteils für Doppelrohre oder rechteckige Rohre, und

Fig. 23 eine Einzelheit der Festlegung eines äußeren Faser-Isolierteils auf der Spitze eines Spießes eines aufbiegbaren Formteils.

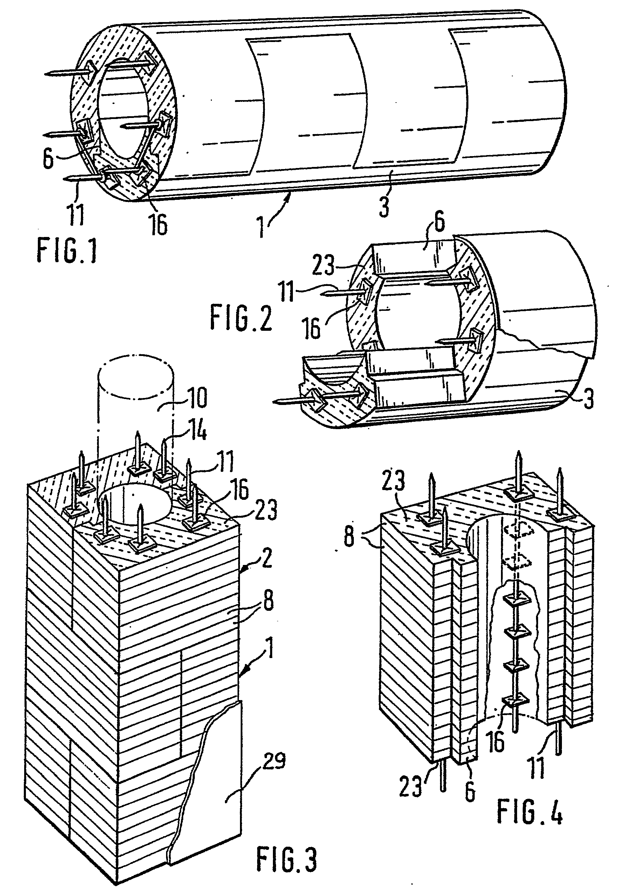

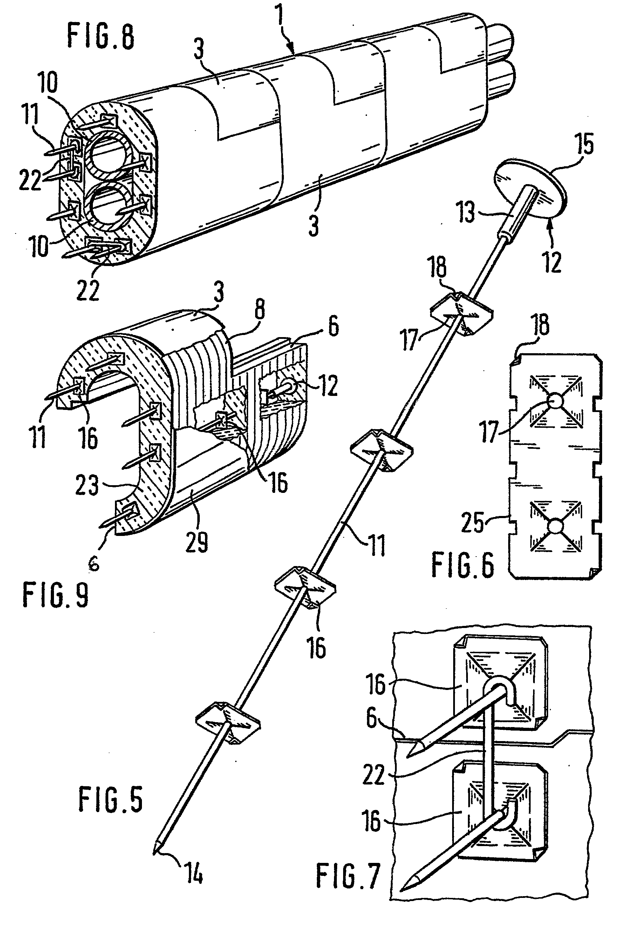

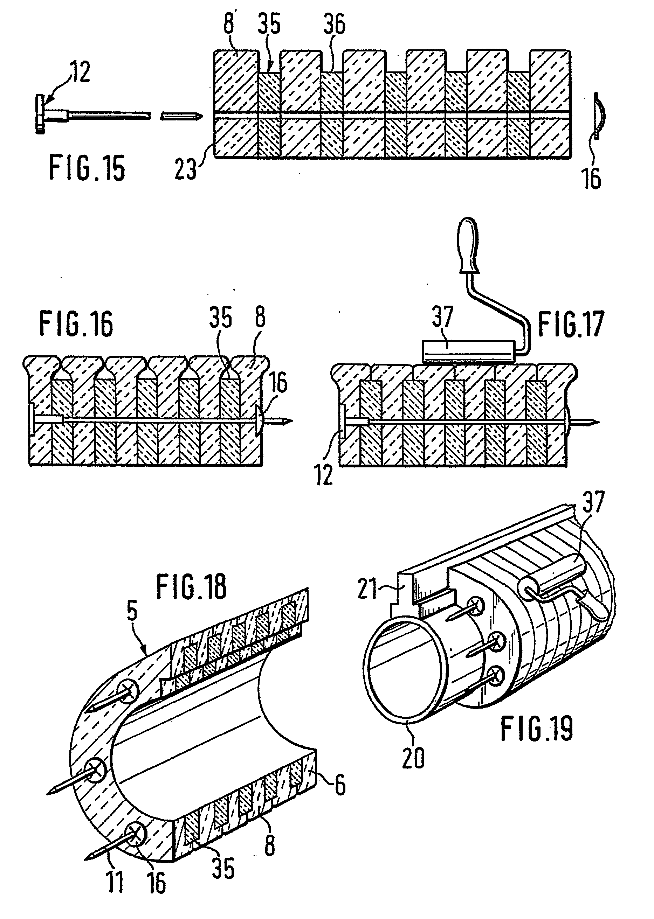

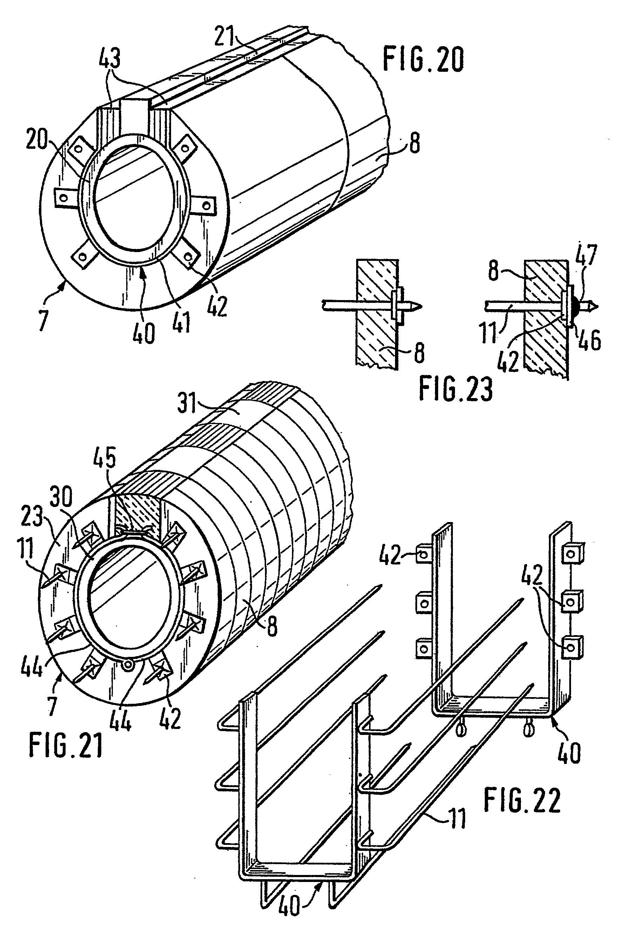

Erfindungsgemäße Rohrummantelungen 1 ergeben sich aus den Fig. 1, 3, 8, 10, 12, 19, 20 und 21. Sie können aus halbschalenförmigen Formteilen 2, sh. Fig. 3 und 10, und 5, sh. Fig. 8 und 19, oder aus abgestuften Formteilen 3, sh. Fig. 8, und 4, sh. Fig. 13, von denen sich zwei oder mehrere zu einer Vollschale ergänzen, oder aus das Rohr ungeteilt umfassenden Formteilen 7, sh. Fig. 20 und 21, aufgebaut sein. Die rohrachsparallelen bzw. axialen Seiten- oder Stoßflächen 6 der halbschalenförmigen oder abgestuften Formteile greifen nicht längs einer ebenen, axialen Stoßfläche sondern längs einer abgestuften, ein Labyrinth bildenden Seitenfläche ineinander, so daß eine Wärmedurchstrahlung unterbunden ist. Die einzelnen Formteile 2, 3, 4 und 5 bestehen aus mehreren flachen Isolierkörpern 8 aus feuerfesten Mineral- oder Keramikfasern, die im Profil ring-, schalen- oder bogenförmig ausgebildet sind und die zu isolierenden Rohre 10 oder 20 allein teilweise und im Verband vollständig oder nahezu vollständig umschließen und daran dicht anliegend angebracht sind. Mehrere flache Isolierkörper 8 bilden einen Isolierkörperstapel.

Die Isolierkörper 8 sind auf mehrere beabstandete, rohrachsparallele Spieße 11 aufgereiht, von denen einer allein in Fig. 5 dargestellt ist. Am einen Ende kann der Spieß als Halterung eine Kragenhülse 12 aufweisen, deren rohrförmiger Schaft 13 am vorderen Ende das untere Ende des Spießes 11 aufnimmt. Der Kragen bzw. die Endplatte 15 dient zur Anlage eines ersten ringförmigen Isolierkörpers 8. In den hinteren Teil des Schaftes 13 kann die Spitze 14 eines anderen Spießes 11 eingeführt werden. Nach dem Aufreihen von zwei bis vier Isolierkörpern 8 auf den Spieß 11 wird ein flacher, als Klipps ausgebildeter Verdichtungs-Klemmhalter 16 aufgesetzt, welcher eine zentrale Klemmdurchbrechung 17 hat, mit welcher er sich auf dem Spieß 11 lagefest festkrallen kann. Diese Klemmdurchbrechung 17 hat die Form eines Lochs von etwas kleinerem Durchmesser als der Spieß 11 mit vom Lochrand radial ausgehenden Einschnitten. Der Verdichtungs-Klemmhalter 16 hat rechteckige Form. Seine Ecken sind abwechselnd in entgegengesetzte Richtung um etwa 90° zur Bildung von Krallen 18 abgewinkelt. Nach dem Aufreihen von einigen Isolierkörpern werden diese stark komprimiert, so daß ein hohes Raumgewicht von z.B. 300 kg/m³ erzielt wird. Anschließend werden weitere Isolierkörper 8 aufgereiht und dann wiederum mit einem Verdichtungs-Klemmhalter 16 fixiert. Ein solcher Verdichtungsklipp liegt schließlich an der Stirnseite des letzten Isolierkörpers 8 an. Der so gebildete Isolierkörperstapel bildet ein vorgefertigtes Formteil 2, 3, 4 oder 5. Die Isolierkörper haben bei abgestufter Ausbildung der Formteile 3, 4 z.B. nach Fig. 2, 7 oder 14 unterschiedliche Querschnittsform. Da die Formteile in gewissen Bereichen länger und in anderen kürzer sind, ist die Länge der Spieße 11 diesem Umstand anzupassen. Mit ihrer Spitze 14 stehen die Spieße 11 über die eine Stirn- oder radiale Stoßfläche 23 der Formteile hinaus, um in die Halterungen eines benachbarten Formteils eingeführt und dort gehalten werden zu können. So können die Spieße bei Vorsehen von Kragenhülsen 12 gemäß Fig. 5 und 9 in das hintere Ende des rohrförmigen Schaftes 13 eingeführt werden. Es können aber auch Verdichtungs-Doppelklemmhalter am Spießende vorgesehen sein, die nahe beieinander zwei Klemmdurchbrechungen haben. Die Spitze 14 wird dann in die neben der Durchbrechung, das Spießende aufnimmt, vorgesehene zweite Durchbrechung eingeführt. Zur Erleichterung des Einführens der Spießspitzen in Halterungen benachbarter Formteile kann es zweckmäßig sein, die Spieße, ausgehend von einem Spieß, zunehmend lang zu machen.

Die in Fig. 3 dargestellte Ummantelung von Stehrohren 10 besteht aus halbschalenförmigen, gleich hohen Faser-Formteilen 2 mit bogenförmiger, der Außenkontur des Stehrohrs 10 angepaßter Innenkontur und rechteckiger Außenkontur, wobei die axialen Stoßflächen 6 labyrinthartig abgestuft sind. Die radialen Stirnflächen 23 der Formteile 2 sind eben. Ebenso wie mit der Außenfläche des Stehrohrs 10 werden die Formteile 2 an den Stirn- oder Stoßflächen miteinander verklebt. Die Spieße 11 stehen über beide Stirnflächen 23 hinweg und sind unmittelbar in die äußeren Isolierkörper 8 der benachbarten Formteile 2 eingeführt. Wegen der stehenden Anordnung und insbes. bei Verklebung der Formteile miteinander und dem Rohr besteht bei den dargestellten, lageweise um 90° versetzten Aufbau keine Gefahr des Lösens und Auseinanderfallens der Ummantelung. Die Ummantelung wird nach der Montage mit einer dünnen Schutzschicht versehen, wie sie anhand von Fig. 9 erläutert ist.

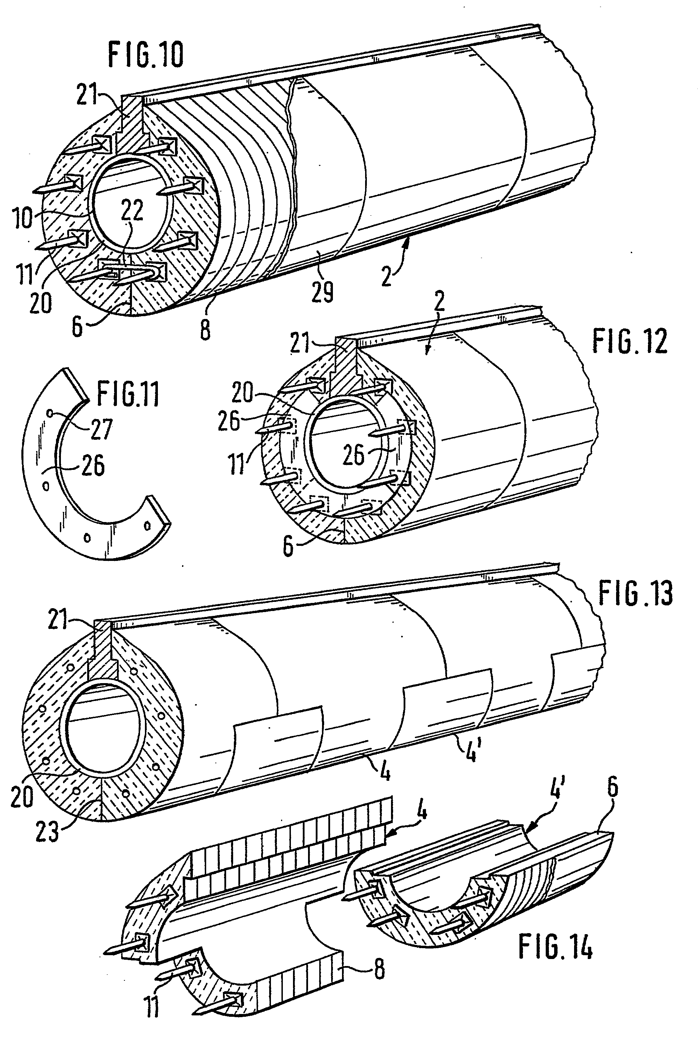

Bei der Ausbildungsform der abgestuften Formteile nach Fig. 8 und 9 bilden jeweils zwei derartige Formteile einen vollständigen Ummantelungsabschnitt. Die Formteile können aber auch derart ausgebildet sein, wie dies aus den Fig. 13 und 14 ersichtlich ist, bei denen halbschalenförmige, abgestufte Formteile 4 einander gegenüberliegend am zu isolierenden Rohr angebracht werden und jeweils durch ein kleineres halbschalenförmiges Formteil 4' ergänzt werden. Diese Ausbildung eignet sich insbes. für Gleitschienenrohre 20, die an ihrer Oberseite mit einer durchgehenden Gleitschiene 21 versehen sind, die über die Ummantelung etwas hinausragt oder für Tragrohre 30 mit Tragköpfen 31, sh. Fig. 21.

Bei der Ausbildungsform nach Fig. 10 ist die Ummantelung in ihren einzelnen Abschnitten aus jeweils zwei halbschalenförmigen Formteilen 2 aufgebaut, wobei die Wandstärke des Formteils auf der Unterseite größer als auf der Oberseite des Rohrs ist, damit sich die beiden Halbschalen dort sicher gegeneinander abstützen können. Im oberen Bereich liegen sie lediglich an der Außenseite des Gleitschienenrohrs 20 auf. Für die Verbindung der Halbschalen oder Formteile dienen Bügel 22, sh. insbes. Fig. 7, die an den Spießspitzen zu beiden Seiten einer axialen Stoßfläche 6 angreifen. Statt derartiger Bügel 22 können auch Doppelklemmhalter 25, sh. Fig. 6, vorgesehen sein.

Bei der gemäß Fig. 12 abgewandelten Ausführungsform der Ummantelung nach Fig. 10 haben die halbschalenförmigen Formteile überall gleiche Wandstärke. Zur Sicherung eines besonders festen Sitzes der Formteile 2 auf dem Gleitschienenrohr 20 sind zwei der in Fig. 11 dargestellten Halbronden 26 mit entsprechend den Spießen 11 angeordneten Durchbrechungen bzw. Bohrungen 27 auf die Spieße 11 derart aufgeschoben, daß sie im Bereich der axialen Stoßflächen 6 der achsparallel aneinanderstoßenden Formteile einander überlappen und jeweils auf den beiden Spießen 11 zu beiden Seiten der axialen Stoßflächen 6 bzw. Längsstoßfuge sitzen. Die Durchbrechungen 27 sind so angeordnet, daß die Halbronden am Gleitschienenrohr anliegen, wozu ihre Innenkontur der Außenkontur des Gleitschienenrohrs angepaßt ist. Die radiale Erstreckung der Halbronden 26 ist kleiner als die Dicke der Formteile, um sie gegen Wärmestrahlung aus dem Ofenraum zu schützen.

Wenigstens in den den Gleitschienen oder Tragköpfen benachbarten Enden der Isolierkörper können diese lagenweise miteinander verklebt sein, um bei Verwendung an Gleitschienenrohren eine noch größere Festigkeit im oberen Bereich zu erzielen.

Zum Schutz gegen äußere Beanspruchungen weisen die Formteile 3 eine Schutzschicht 29 auf, die insbes. in Fig. 9 erkennbar ist. Es handelt sich um eine aufgespritzte dünne Schutzschicht auf Zirkon-Silikat-Basis.

Bei der Ausführungsform nach den Fig. 15 bis 19 sind die Formteile 5 abwechselnd aus komprimierbaren Faser-Isolierkörpern 8 und ringabschnittförmigen, formstabilen vorgeformten Isolierkörpern 35 mit einer Dichte von 260 kg/m³ und darüber gefertigt. Nach Aufreihen von jeweils einem oder zwei Faser-Isolierkörper 8 wird wiederum ein nicht dargestellter Verdichtungs-Klemmhalter 16 aufgeschoben, welcher nach Zusammendrücken der Faser-Isolierkörper 8 diese in stark komprimiertem Zustand hält. Diese Faser-Isolierkörper 8 stehen radial über die hochdichten Isolierkörper 35 hinweg und werden an deren Außenflächen 36 angewalzt, beispielsweise mittels der in den Fig. 17 und 19 dargestellten Handrolle 37. Anschließend wird zur Fixierung eine Schutzschicht, die der Schutzschicht 29 nach Fig. 9 entspricht, aufgespritzt. Durch diese überlappende Schichtenbauweise wird verhindert, daß eine thermische Einstrahlung auf die armierenden Spieße 11 auftrifft. Die innere Querschnittsform der Isolierkörper ist dem Rohr angepaßt, was insbes. bei Gleitschienenrohren 20, sh. Fig. 19, erforderlich ist, wenn die Gleitschiene 21 mit einem verbreiterten Fuß auf dem Gleitschienenrohr 20 aufruht.

Die Formteile nach den Fig. 20 und 21 sind als ein Gleitschienenrohr 20 oder ein Tragrohr 30 ungeteilt von unten bis nahe der Seiten der Gleitschiene 21 bzw. den Tragköpfen 31 umfassende aufbiegbare Formteile 7 mit nicht oder nur wenig über die eine Stirnfläche 23 vorstehenden Spießen 11 ausgebildet. Sie vermeiden Längsstöße oder -fugen, bei denen im Betrieb die Gefahr des Öffnens bestehen kann. Um ein für das Aufbringen auf das Rohr ausreichendes Öffnen oder Aufbiegen des Formteils 7 aus Faser-Isolierkörpern 8 und nachfolgendes Schließen zu ermöglichen, sind an beiden Enden des Formteils jeweils entsprechende Halterungen 40 vorgesehen, die sich um das Rohr legen.

Bei der Ausführungsform nach Fig. 20 bestehen die Halterungen aus einer entsprechend der Rohrkontur gebogenen federnden nachgiebigen Flachmaterialklammer 41 mit radial abstehenden Flachmateriallaschen 42 zur Aufnahme der Spieße 11. An den Laschen 42 der einen Klammer 41 sind die Spieße 11 befestigt, insbesondere angeschweißt, während in den Laschen der anderen Halterung Durchbrechungen oder Bohrungen vorgesehen sind, durch die die Spitzen der Spieße reichen. Hinter den Laschen ist auf jede Spießspitze jeweils eine Ringscheibe 46 und ein Schweißpunkt 47, sh. Fig. 23, gesetzt, so daß sich die Spießspitze nicht zurückziehen, die Spießspitze aber bei Erwärmung weiter durch die Lasche gleiten kann. Nach dem Aufbringen des Formteils 7 können die Enden der Klammern 41 am Gleitschienenrohr 20 seitlich der Gleitschiene 21 angeheftet werden. Anschließend wird zu beiden Seiten der Gleitschiene eine Füllschicht 43 eingebracht.

Bei der Ausführungsform der Halterungen 40 nach Fig. 21 bestehen diese aus zwei am einen Ende gelenkig miteinander verbundenen gebogenen, gleichgroßen Flachmaterialstücken 44 mit radial abstehenden Laschen 42 für die Aufnahme der Spieße 11. Die Flachmaterialstücke 44 sind am oberen Ende abgebogen und können dort nach der Montage mit Bindedraht 45 oder einem Doppelhaken zwischen den Tragköpfen 31 zusammengehalten werden.

Der zwischen den Tragköpfen 31 verbleibende Spalt kann mit einem vorgefertigten Isolierteil oder Füllmasse geschlossen werden.

Die Formteile 7 können ohne Abnahme anderer Formteile einzeln ausgebaut werden.

Fig. 22 zeigt im Querschnitt rechteckige Halterungen 40 aus federnd nachgiebigem Flachmaterial. An der einen Halterung sind die am einen Ende doppelt abgebogenen Spieße 11 angeschweißt. Die andere Halterung nimmt die Spießspitzen in Bohrungen von radial abstehenden Flacheisenlaschen 42 auf. Auf die Spießspitzen sind Ringscheiben 46 geschoben und anschließend mit einem Schweißpunkt 47 als Widerlager, wie es Fig. 23 zeigt, gesichert.

**Patentansprüche**

1. Feuerfeste Ummantelung aus unbrennbaren, zusammengedrückten, flachen Isolierkörpern (8) aus Mineral- oder Keramikfasern für die Wärmeisolierung von Rohren (10), Gleitschienenrohren (20), Tragrohren (30), Stehrohren und dergleichen in Vorwärmöfen, Stoßöfen oder Hubbalkenöfen, bei der die Isolierkörper im Profil innen und gegebenfalls auch außen bogenförmig ausgebildet sind, das zu isolierende Rohr in Umfangsrichtung vollständig oder nahezu vollständig umschließen und am Rohr dicht aneinanderstoßend zwischen wenigstens zwei Halterungen (12, 16, 25, 40) gehalten sind, die an den Enden mehrerer, aneinanderliegender, einen Isolierkörperstapel bildender Isolierkörper angreifen, dadurch gekennzeichnet, daß mehrere Isolierkörper (8) auf mehreren beabstandeten Spießen (11) zu einem hochverdichteten Isolierkörperstapel aufgereiht sind, daß zwischen den an den Enden des Stapels vorgesehenen Halterungen (12, 40) auf den Spießen im Abstand voneinander mehrere Verdichtungs-Klemmhalter (16) zwischen Isolierkörpern vorgesehen sind und daß die Spieße mit ihrer Spitze (14) über die eine Stirnfläche (23) des ein vorgefertigtes Formteil (2, 3, 4, 5, 7) bildenden Isolierkörperstapels vorstehen.

2. Ummantelung nach Anspruch 1, dadurch gekennzeichnet, daß die Verdichtungs-Klemmhalter (16) nach jedem zweiten oder dritten Isolierkörper (8, 35) vorgesehen sind.

3. Ummantelung nach Anspruch 1 oder 2, dadurch gekennzeichnet, daß die Verdichtungs-Klemmhalter (16) von wenigstens einer Seite vorstehende, in die anliegenden Isolierkörper (8) eingreifende Krallen (18) oder Lappen aufweisen.

4. Ummantelung nach Anspruch 1, dadurch gekennzeichnet, daß die Spitzen (14) der Spieße (11) in der zugewandten Stirn- bzw. Stoßfläche (23) oder in einer Halterung (12, 25, 40) des benachbarten Formteils aufgenommen sind.

5. Ummantelung nach einem der Ansprüche 1 bis 4, dadurch gekennzeichnet, daß die Formteile (2, 3, 5) etwa halbschalenförmig ausgebildet und die Spieße (11) zu beiden Seiten wenigstens der einen axialen Stoßfläche (6) mechanisch, insbes. mittels Bügeln (22) oder Steckplatten (-haltern) (25), miteinander verbunden sind.

6. Ummantelung nach einem der Ansprüche 1 bis 4, dadurch gekennzeichnet, daß das Rohr (10, 20) nur teilweise umschließende Formteile als in Längsrichtung derart abgestufte Formteile (2, 3, 4) ausgebildet sind, daß in Umfangsrichtung und in Längsrichtung aneinanderstoßende Formteile einen geschlossenen Verband bilden.

7. Ummantelung nach Anspruch 5 oder 6, dadurch gekennzeichnet, daß die axialen Stoßflächen (6) aneinanderstoßender Formteile (2, 3, 4) abgestuft oder mit Nut und Feder ausgebildet sind.

8. Ummantelung nach Anspruch 5, 6 oder 7 insbesondere für Gleitschienenrohre (20), dadurch gekennzeichnet, daß zwischen den Stirnflächen (23) aneinanderstoßender Formteile (2, 5) zwei einander jede axiale Stoßfläche (6) überlappende flache Halbronden (26) eingesetzt sind, die im Überlappungsbereich von Spießen (11) beider Formteile durchdrungen werden und die wenigstens auf der der Stoßfläche (6) gegenüberliegenden Seite des Rohrs (20) an diesem anliegen.

9. Ummantelung nach einem der Ansprüche 5 bis 8, dadurch gekennzeichnet, daß die Isolierkörper (8) wenigstens im Bereich der den axialen Stoßflächen (6) zugewandten Enden ihrer seitlichen Stirnflächen miteinander verklebt sind.

10. Ummantelung nach einem der Ansprüche 4 bis 9, dadurch gekennzeichnet, daß die Halterung am einen Ende des Formteils als auf das Ende des Spießes (11) aufgesteckte Kragenhülse (12) ausgebildet ist, deren rohrförmiger Schaft (13) das hintere Ende des Spießes und die Spitze (14) des Spießes eines anstoßenden Formteils aufnimmt.

11. Ummantelung nach einem der Ansprüche 4 bis 9, dadurch gekennzeichnet, daß die Halterung am einen Ende des Formteils (2, 3, 4, 5) als aufgesteckter Verdichtungs-Klemmhalter (25) mit zwei Klemmdurchbrechungen (17) ausgebildet ist, von denen die eine das hintere Ende des Spießes (11) und die andere die Spitze (14) des Spießes eines anstoßenden Formteils aufnimmt.

12. Ummantelung nach einem der Ansprüche 1 bis 4 insbesondere für Gleitschienenrohre (20) oder Tragrohre (30), dadurch gekennzeichnet, daß das Formteil (7) das Rohr (20, 30) im wesentlichen vollständig durchgehend umfaßt und die Halterungen (40) ein Öffnen des Formteils zum Aufbringen auf das Rohr zulassen.

13. Ummantelung nach Anspruch 12, dadurch gekennzeichnet, daß die Halterungen (40) aus federndem Flachmaterial (41) mit radial abstehenden Laschen (42) für die Spieße (11) bestehen.

14. Ummantelung nach Anspruch 12, insbesondere für glatte Rohre (10) und Tragrohre (30) mit Tragköpfen (31), dadurch gekennzeichnet, daß die Halterung (40) aus zwei gelenkig miteinander verbundenen Flachmaterialstücken (44) mit abstehenden Laschen (42) für die Spieße (11) bestehen, und die Flachmaterialstücke an ihren einander zugewandten Enden Abbiegungen oder Vorsprünge zum Verbinden nach dem Aufbringen auf das Rohr aufweisen.

15. Ummantelung nach einem der Ansprüche 12 bis 14, dadurch gekennzeichnet, daß der Isolierkörper (8), aus dem die Spitze des Spießes (11) herausragt, mit einer auf den Spieß geschobenen Ringscheibe (46) festgelegt ist, die sich ihrerseits gegen ein Widerlager auf dem Spieß, insbesondere in Form eines Schweißpunktes (47), axial abstützt.

16. Ummantelung nach einem der Ansprüche 5 bis 15, dadurch gekennzeichnet, daß zwischen zwei Faser-Isolierkörpern (8) jeweils ein ringabschnittförmiger, formstabiler vorgeformter Isolierkörper (35) mit einer Dichte von wenigstens 250 kg/m³ und mit geringerer radialer Erstreckung als der Faser-Isolierkörper vorgesehen ist und daß die überstehenden Enden der Faser-Isolierkörper (8) über die Außenflächen (36) der formstabilen Isolierkörper (35) geformt bzw. gebördelt sind.

17. Ummantelung nach einem der Ansprüche 5 bis 16, dadurch gekennzeichnet, daß die Formteile (2, 3, 4, 5, 7) auf ihrer Außenseite mit einer 0,5 bis 5 mm dicken Schutzschicht (29), insbesondere auf Zirkon- Silikat-Basis, versehen sind.

**Claims**

1. Refractory covering composed of non-combustible, compressed, flat insulating elements (8) from mineral or ceramic fibres for the heat insulation of tubes (10), skid rail tubes (20), supporting tubes (30), vertical tubes and the like in preheating, continuous type or walking beam furnaces, in which covering the insulating elements are formad inside and, if necessary, outside with an arcuate profile, envelop the tube to be insulated entirely or substantially entirely in the circumferential direction, and are held on the tube in a closely abutting manner between at least two mounts (12, 16, 25, 40) which engage with the ends of a number of abutting insulating elements forming an insulating element stack, characterized in that a number of insulating elements (8) are threaded on a number of spaced rods (11) to form a highly compacted insulating element stack, in that between the mounts (12, 40) provided at the ends of the stack a number of compacting and clamping retainers (16) are provided on the rods in spaced relationship between insulating elements, and in that the rods have their tip (14) protrude beyond the one face (23) of the insulating element stack forming a prefabricated preform (2, 3, 4, 5, 7).

2. The covering according to claim 1, characterized in that the compacting and clamping retainers (16) are provided behind every second or third insulating element (8, 35).

3. The covering according to claim 1 or 2, characterized in that the compacting and clamping retainers (16) have claws (18) or tabs projecting from at least one side and engaging into the adjacent insulating elements (8).

4. The covering according to claim 1, characterized in that the tips (14) of the rods (11) are received in the respective face or abutting surface (23) or in a mount (12, 25, 40) of the adjacent preform.

5. The covering according to any one of claims 1 to 4, characterized in that the preforms (2, 3, 5) are designed in the general form of one half of a shell, and on both sides of at least the one axial abutting surface (6), the rods (11) are connected to each other by mechanical means, more particularly by means of hoops (22) or slip-on plates (mounts) (25).

6. The covering according to any one of claims 1 to 4, characterized in that the preforms which envelop only part of the tube (10, 20), are designed as preforms (2, 3, 4) of a longitudinally stepped configuration such that preforms abutting in the circumferential and longitudinal directions constitute a closed formation.

7. The covering according to claim 5 or 6, characterized in that the axial abutting surfaces (6) of abutting preforms (2, 3, 4) are formed with steps or with groove and tongue.

8. The covering according to claim 5, 6 or 7, more particularly for skid rail tubes (20), characterized in that in between the faces (23) of abutting preforms (2, 5), flat half rounds (26) which overlap each other and each axial abutting surface (6) are inserted which, within the overlap zone, are traversed by rods (11) of both preforms and which engage with the tube (20) at least on the side thereof opposite to the abutting surface (6).

9. The covering according to any one of claims 5 to 8, characterized in that the insulating elements (8) are bonded to each other at least within the area of the extremities of their lateral faces which are adjacent to the axial abutting surfaces (6).

10. The covering according to any one of claims 4 to 9, characterized in that the mount on the one end of the preform is designed as a collar-type sleeve (12) fitted over the end portion of the rod (11), the tubular shaft (13) of the sleeve receiving the tail end of the rod and the tip (14) of the rod of an abutting preform.

11. The covering according to any one of claims 4 to 9, characterized in that the mount on the one end of the preform (2, 3, 4, 5) is designed as a slid-on compacting and clamping retainer (25) having two clamping openings (17) of which the one opening receives the tail end of rod (11) and the other one receives the tip (14) of the rod of an abutting preform.

12. The covering according to any one of claims 1 to 4, more particularly for skid rail tubes (20) or supporting tubes (30), characterized in that the preform (7) encloses the tube (20, 30) generally in an entirely continuous manner, and the mounts (40) admit the preform to be opened for installation on the tube.

13. The covering according to claim 12, characterized in that the mounts (40) consist of resilient flat material (41) having radially projecting ears (42) for the rods (11).

14. The covering according to claim 12, more particularly for plain tubes (10) and supporting tubes (30) provided with supporting heads (31), characterized in that the mounts (40) consist of two hingedly connected pieces (44) of flat material having protruding ears (42) for the rods (11), and the pieces of flat material have their facing ends formed with bends or projections for connection after insallation on the tube.

15. The covering according to any one of claims 12 to 14, characterized in that the insulating element (8) from which the tip of rod (11) is protruding is locked by means of an annular disc (46) fitted over the rod, said disc, in turn, bearing axially against an abutment disposed on the rod, especially in the form of a weld point (47).

16. The covering according to any one of claims 5 to 15, characterized in that in between two fibre insulating elements (8) each a part-annular, dimensionally stable, preformed insulating element (35) is provided which has a density of at least 250 kg/m$^3$ and a radial extension smaller than the fibre insulating element, and in that the protruding ends of the fibre insulating elements (8) are deformed or crimped over the peripheral surfaces (36) of the dimensionally stable insulating elements (35).

17. The covering according to any one of claims 5 to 16, characterized in that the preforms (2, 3, 4, 5, 7) are provided on their exterior with a protective layer (29) of 0.5 to 5 mm thickness, especially on a zircon mineral basis.

**Revendications**

1. Gaine réfractaire, composée de corps isolants (8) non combustibles, comprimés, plats, en fibres minéraux ou céramiques, destinée à l'isolation thermique de tubes (10), de tubes à barre de glissière (20), tubes de support (30), tubes verticaux et similaires dans des fours préchauffeurs, fours poussants ou fours à longerons mobiles, dans laquelle les corps isolants, vus en profil, ont à l'intérieur et, si nécessaire, à l'extérieur, une forme arquée, enveloppent le tube à isoler entièrement ou sensiblement entièrement dans la direction circonférentielle, et sont tenus, sur le tube, étroitement jointifs, entre au moins deux fixations (12, 16, 25, 40) qui attaquent les extrémités de plusieurs corps isolants se touchant les uns les autres et formant une pile de corps isolants, caractérisée en ce que plusieurs corps isolants (8) sont enfilés sur plusieurs tiges (11) espacées pour former une pile hautement compactée de corps isolants, en ce que, entre les fixations (12, 40), prévues aux extrémités de la pile, on a prévu, espacées le long des tiges, plusieurs butées de serrage et de compactage (16) disposées entre des corps isolants, et en ce que les tiges font saillie avec leur pointe (14) par rapport à l'une des faces (23) de la pile de corps isolants, cette pile formant un préformé (2, 3, 4, 5, 7) préfabriqué.

2. Gaine selon la revendication 1, caractérisée en ce que les butées de serrage et de compactage (16) sont prévues tous les deux au trois corps isolants (8, 35).

3. Gaine selon la revendication 1 ou 2, caractérisée en ce que les butées de serrage et de compactage (16) comportent des crabots (18) ou pattes, faisant saillie sur au moins un côté et s'enfonçant dans les corps isolants (8) aboutants.

4. Gaine selon la revendication 1, caractérisée en ce que les pointes (14) des tiges (11) sont reçues dans la face ou la surface d'about (23) tournée vers elles, ou dans une fixation (12, 25, 40) du préformé voisin.

5. Gaine selon l'une quelconque des revendications 1 à 4, caractérisée en ce que les préformés (2, 3, 5) ont la forme approximative d'une moitié d'une coquille, et que les tiges (11) sont reliées entre elles, des deux côtés de l'une des surfaces d'about axiales (6), au moins, par des moyens mécaniques, plus particulièrement à l'aide de brides (22) ou de plaques (butées) enfilables (25).

6. Gaine selon l'une quelconque des revendication 1 à 4, caractérisée en ce que les préformés qui enveloppent le tube (10, 20) seulement en partie, sont réalisés comme des préformés (2, 3, 4) longitudinalement étagés de telle façon que des préformés jointifs dans les directions circonférentielle et longitudinale constituent un appareil fermé.

7. Gaine selon la revendication 5 ou 6, caractérisée en ce que les surfaces d'about axiales (6) de préformés (2, 3, 4) jointifs sont réalisées en forme étagée ou avec rainure et languette.

8. Gaine selon la revendication 5, 6 ou 7, plus particulièrement pour tubes à barre de glissière (20), caractérisée en ce que entre les faces (23) de préformés jointifs (2, 5), on a intercalé deux éléments semi-circulaires (26) plats, se chevauchant et recouvrant chaque surface d'about axiale (6), qui, dans la zone de recouvrement, sont traversés de tiges (11) des deux préformés et qui, au moins du côté opposé du tube (20) par rapport à la surface d'about (6), prennent appui sur ledit tube.

9. Gaine selon l'une quelconque des revendications 5 à 8, caractérisée en ce que les corps isolants (8) sont collés les uns sur les autres au moins dans la zone des extrémités de leurs faces latérales adjacentes aux surfaces d'about axiales (6).

10. Gaine selon l'une quelconque des revendications 4 à 9, caractérisée en ce que la fixation à l'une des extrémités du préformé est réalisée sous forme d'une douille à collet (12) enfilée sur le bout de la tige (11), le corps tubulaire (13) de ladite douille recevant le bout arrière de la tige et la pointe (14) de la tige d'un préformé aboutant.

11. Gaine selon l'une quelconque des revendications 4 à 9, caractérisée en ce que la fixation à l'une des extrémités du préformé (2, 3, 4, 5) est réalisée sous forme d'une butée de serrage et de compactage (25) enfilée, munie de deux découpures de serrage (17) dont l'une reçoit le bout arrière de la tige (11) et l'autre reçoit la pointe (14) de la tige d'un préformé adjacent.

12. Gaine selon l'une quelconque des revendications 1 à 4, plus particulièrement pour tubes à barre de glissière (20) ou tubes de support (30), caractérisée en ce que le préformé (7) enveloppe le tube (20, 30) sensiblement d'une manière entièrement continue, et que les fixations (40) autorisent l'ouverture de préformé en vue de sa mise en place sur le tube.

13. Gaine selon la revendication 12, caractérisée en ce que les fixations (40) consistent en un matériau plat élastique (41) ayant des éclisses (42), qui font saillie radialement, pour les tiges (11).

14. Gaine selon la revendication 12, plus particulièrement pour tubes lisses (10) et tubes de support (30) à blocs d'appui (31), caractérisée en ce que la fixation (40) consiste en deux pièces articulées en matériau plat (44), ayant des éclisses (42), qui font saillie, pour les tiges (11), et que les pièces en matériau plat comportent, à leurs extrémités voisines, des parties pliées ou en saillie qui servent à l'assemblage après la mise en place sur le tube.

15. Gaine selon l'une quelconque des revendications 12 à 14, caractérisée en ce que le corps isolant (8) d'où sort la pointe de la tige (11), est immobilisé à l'aide d'un disque annulaire (46) enfilé sur la tige, ledit disque, de son côté, prenant appui axialement contre une butée disposée sur la tige, plus particulièrement sous forme d'un point de soudage (47).

16. Gaine selon l'une quelconque des revendications 5 à 15 caractérisée en ce que entre chaque fois deux corps isolants (8) en fibres, on a prévu un corps isolant (35) préformé, indéformable, sous forme d'un anneau partiel, ayant une densité de 250 kg/m$^3$, au moins, et une dimension radiale plus petite que celle du corps isolant en fibres, et que les bouts faisant saillie des corps isolant (8) en fibres sont déformés ou repliés sur les surfaces périphériques (36) des corps isolant indéformables (35).

17. Gaine selon l'une quelconque des revendications 5 à 16, caractérisée en ce que les préformés (2, 3, 4, 5, 7) sont munis, sur leur face extérieure, d'une couche protectrice (29), plus particulièrement à base de silicozirconate, d'une épaisseur de 0,5 à 5 mm.

FIG.1

FIG.2

FIG.3

FIG.4

FIG.8

FIG.9

FIG.5

FIG.6

FIG.7

FIG.10

FIG.11

FIG.12

FIG.13

FIG.14

FIG.15

FIG.16

FIG.17

FIG.18

FIG.19

FIG.20

FIG.23

FIG.21

FIG.22